# EUROPÄISCHE PATENTSCHRIFT

(11) **EP 3 652 008 B1**
(45) Veröffentlichungstag und Bekanntmachung des Hinweises auf die Patenterteilung: **26.06.2024**
(21) Anmeldenummer: 18739506.6
(22) Anmeldetag: 05.07.2018
(51) Int. Cl.: B60J 1/20

(54) **HALTER FÜR EIN FLÄCHENELEMENT EINER SONNENSCHUTZ- ODER VERDUNKLUNGSVORRICHTUNG UND SONNENSCHUTZ- ODER VERDUNKLUNGSVORRICHTUNG**
HOLDER FOR SUN-SHADE
SUPPORT POUR PARE-SOLEIL

(30) Priorität: 14.07.2017 DE 202017104204 U
(43) Veröffentlichungstag der Anmeldung: 20.05.2020
(73) Patentinhaber: Windesa GmbH, 49084 Osnabrück (DE)
(72) Erfinder: BORNER, Norbert, 49078 Osnabrück (DE)
(74) Vertreter: Wischmeyer, André
(86) Internationale Anmeldenummer: PCT/EP2018/068280
(87) Internationale Veröffentlichungsnummer: WO 2019/011783

(56) Entgegenhaltungen:
- WO-A2-2015/047137
- US-B1- 9 272 605
- volvosweden: "Volo Sun Shades Curtains", , 20. November 2014 (2014-11-20), XP054978632, Gefunden im Internet: URL:https://www.youtube.com/watch?v=JBgfyQ CWXuY [gefunden am 2018-08-24]

## Beschreibung

Die vorliegende Erfindung betrifft einen Halter für ein Flächenelement einer Sonnenschutz- oder Verdunklungsvorrichtung, welches zur Abdeckung einer Fensterscheibe eines Kraftfahrzeugs mit einer Bespannung aus einem dünnen Bespannungsmaterial und einem randseitigen umlaufenden, vorzugsweise als Spannrahmen ausgebildeten Rahmen versehen ist, wobei der Halter einen Rahmen für einen Abschnitt des vorzugsweise mit dem Bespannungsmaterial überdeckten Rahmens vorgesehenen Aufnahmeraum mit einer Aufnahmeöffnung aufweist, der von einer Basis begrenzt wird. Des Weiteren betrifft die Erfindung eine entsprechende Sonnenschutz- oder Verdunklungsvorrichtung.

Aus dem Markt bekannt sind zur Festlegung entsprechender Flächenelemente von Sonnenschutz- oder Verdunklungsvorrichtungen vorgesehene Halter, deren Basis auf einer Seite einen Aufnahmeraum mit einer Aufnahmeöffnung aufweist, in die der Rahmen eingesteckt werden muss. Auf der dem Aufnahmeraum entgegengesetzten Seite der Basis ist eine Klebeschicht vorhanden. Mit dieser Klebeschicht wird der Halter auf einem Verkleidungs- oder Rahmenteil des Kraftfahrzeugs befestigt. Nachteilig ist hierbei, dass die zu beklebende Fläche oftmals nicht ausreichend vorbehandelt und daher nicht sauber bzw. fettfrei ist. Die Klebeschicht gewährt gerade bei einem aufgeheizten Kraftfahrzeuginnenraum keine ausreichende Haftung. Das Flächenelement der Sonnenschutzvorrichtung ist dann nicht ausreichend befestigt. Weiterhin kommt es vor, dass die Klebeschicht nicht rückstandsfrei entfernt werden kann, was beim Austausch der Halter oder bei Leasingfahrzeugen zu Problemen führen kann.

Ferner offenbaren die WO 2015/047137 A2 und die US 9,272,605 B1 Gegenstände zum Befestigen eines Flächenelementes einer Sonnenschutz- oder Verdunklungsvorrichtung. Außerdem ist ein ähnlicher Halter im Video XP054978632 offenbart.

Die Befestigung mittels der Gegenstände ist gleichwohl mangelhaft.

Es ist Aufgabe der vorliegenden Erfindung einen gattungsgemäßen Halter bzw. eine gattungsgemäße Sonnenschutz- oder Verdunklungsvorrichtung hinsichtlich der genannten Probleme zu verbessern.

Gelöst wird diese Aufgabe durch einen Gegenstand gemäß Anspruch 1 sowie durch einen Gegenstand gemäß Anspruch 9. Vorteilhafte Ausgestaltungen der Erfindung sind den auf den Anspruch 1 rückbezogenen Unteransprüchen sowie der nachfolgenden Beschreibung zu entnehmen.

Erfindungsgemäß ist vorgesehen, einen gattungsgemäßen Halter dahingehend weiterzubilden, dass er ein von der Basis wegweisendes Einsteckelement aufweist, dessen von der Basis entferntes Ende hakenartig ausgebildet ist und das auf einer der Fensterscheibe zuzuwendenden Seite eine Anlagefläche aufweist, wobei die Basis einen Abstützbereich aufweist, der auf einer Seite der Basis angeordnet ist, die in eine von der Anlagefläche abgewandte Innenseite des Einsteckelements übergeht. Ein solcher Halter kann mit seinem Einsteckelement insbesondere zwischen einer Fensterscheibendichtung und einem Verkleidungs- oder anderen Funktionsteil des Kraftfahrzeugs, vorzugsweise einem Rahmen eingesteckt und dort zunächst aufgrund seines hakenartigen Endes befestigt werden. Über die der Fensterscheibe zuzuwendenden Seite ist eine Anlagefläche für die in der Regel aus einem vergleichsweise harten Kunststoff oder Gummi gefertigte Fensterscheibendichtung gegeben, die den Halter in Richtung des Verkleidungs- oder Funktionsteils des Fahrzeugs drückt. Um nun eine exakte Ausrichtung der Aufnahmeöffnung und des Aufnahmeraums zu gewährleisten, ist auf der Basis ein Abstützbereich vorgesehen, der gemeinsam mit dem hakenartigen Endbereich des Einsteckelements und gegebenenfalls weiteren Bereichen der Innenseite Lager ausbildet, in denen der Halter abgestützt ist. Durch das hakenartige Ende rutscht bei einem hierzu insbesondere entlang des Einsteckelements in Richtung der Basis versetzten Andrücken durch ein Scheibendichtungselement bzw. die Fensterscheibendichtung der Halter nicht aus der Halterung. In Kombination mit dem Abstützbereich ist eine selbst bei hohen Geschwindigkeiten und geöffneten Fenstern wirkungsvolle Halterung des Flächenelements gewährleistet.

Zusätzlich kann auf der Innenseite eine Innenanlagefläche ausgebildet werden, welche vorzugsweise von dem Abstützbereich beabstandet ist, so dass neben dem oder gemeinsam mit dem hakenartigen Ende des Einsteckelements eine verbesserte Anlage des Halters an dem Verkleidungs- oder weiteren Funktionsteil des Fahrzeugs ermöglicht wird.

Erfindungsgemäß ist das Einsteckelement im Querschnitt betrachtet ungerade ausgebildet und bezüglich seiner zur Fensterscheibe zuzuwendenden Seite nach außen gebogen, d.h. konkav ausgebildet. Hierdurch wird insbesondere bei einer durch einen im Wesentlichen rechtwinklig an dem Einsteckelement ansetzenden Flansch ausgebildeten Basis erreicht, dass das hakenartige Ende verbessert in die Endposition des Kraftfahrzeugs überführt werden kann. Dies ist insbesondere bei höherwertigen Fahrzeugen von Vorteil, da Beschädigungen beispielsweise am Dichtungsmaterial der Scheibendichtungen minimiert werden. Darüber hinaus kann über diese Form ein Konturverlauf der Dichtung, die in Richtung der Basis relativ oft schmaler wird und ausläuft, nachempfunden werden, so dass der Aufnahmeraum und mithin das Flächenelement dichter an der Fensterscheibe positioniert werden können bei gleichzeitig optimaler Abstützung an dem Fensterrahmen bzw. den zugehörigen Verkleidungs- oder anderen Funktionsteilen des Kraftfahrzeugs. Die Ausrichtung des Aufnahmeraums dicht an der Fensterscheibe führt zu einer optimalen Positionierung des Flächenelements.

Je nach Ausbildung der Verkleidung kann es vorteilhaft sein, wenn das Einsteckelement mehr als ein einen Haken ausbildenden Steg aufweist, wobei insbesondere zur Unterstützung der Hakenfunktion zwischen dem vorzugsweise am Ende des Einsteckelements angeordneten Steg desselben und der Innenseite ein Winkel ≤ 90° ausgebildet wird.

Gemäß einer weiteren vorteilhaften Ausbildung der Erfindung ist im Querschnitt die Außenfläche einer zur Fensterscheibe hinzuwendenden Wand des Aufnahmeraums gebogen, wobei die Wand in Richtung des von der Basis abgewandten Endes dünner wird. Somit hebt sich das dünner werdende Ende von etwaigen anliegenden Fensterscheibenflächen ab, was gerade für die Anordnung in den oberen Rahmenbereichen der Fenster vorteilhaft ist, da dann die Fensterscheibe beim Schließen weniger auf das Ende des Halters auffährt.

Vorteilhafterweise ist der Aufnahmeraum durch an der Basis angeordnete Wände begrenzt, deren einander zugewandte Oberflächen überwiegend parallel zueinander ausgebildet sind. Dies erleichtert ein Entfernen der Rahmenelemente, ohne das der Halter aus dem Lagersitz zwischen Fensterscheibendichtung und Verkleidung od.dgl. herausgezogen wird.

Insbesondere ist der Halter im Wesentlichen h-förmig ausgebildet, so dass eine einfach zu erläuternde Handhabung der Halterung mit einer eindeutigen Aufnahme und einem klar erkennbaren Einsteckelement geschaffen ist. Eine solche Form ist insbesondere dafür geeignet, den Halter durch ein Strangpressprofil, vorzugsweise aus Kunststoff, auszubilden. Ein solches Profil kann einfach abgelängt werden und mit einfachen Strangpresswerkzeugen hergestellt werden.

Nach dem Ablängen können Spitzen oder Ecken des Profils an den Wänden des Aufnahmeraums abgekantet oder gerundet werden, um eine Beschädigung des Bespannungsmaterials des Flächenelements zu vermeiden.

Die eingangs gestellte Aufgabe wird dem ebenfalls durch eine Sonnenschutz- oder Verdunklungsvorrichtung mit einem Flächenelement gelöst, welches zur Abdeckung einer Fensterscheibe eines Kraftfahrzeugs mit einer Bespannung aus einem dünnen Bespannungsmaterials und einem randseitig umlaufenden, vorzugsweise als Spannrahmen ausgebildeten Rahmen versehen ist, wobei diese Sonnenschutz- oder Verdunklungsvorrichtung wenigstens einen Halter, wie er vor- oder nachbeschrieben ist, aufweist.

Weitere Vorteile und Einzelheiten der Erfindung lassen sich der nachfolgenden Figurenbeschreibung entnehmen. Schematisch dargestellt zeigt
- Fig. 1: einen erfindungsgemäßen Gegenstand in einer perspektivischen Ansicht,
- Fig. 2: den Gegenstand nach Fig. 1 in einem Querschnitt,
- Fig. 3: einen weiteren erfindungsgemäßen Gegenstand in einer perspektivischen Darstellung,
- Fig. 4: einen Teil der erfindungsgemäßen Sonnenschutz- oder Verdunklungsvorrichtung in einer Einbausituation.

Einzelne technische Merkmale der nach beschriebenen Ausführungsbeispiele können auch in Kombination mit vorbeschriebenen Ausführungsbeispielen sowie den Merkmalen der unabhängigen Ansprüche und etwaig weiterer Ansprüche zu erfindungsgemäßen Gegenständen kombiniert werden. Sofern sinnvoll, werden funktional gleichwirkende Elemente mit identischen Bezugsziffern versehen.

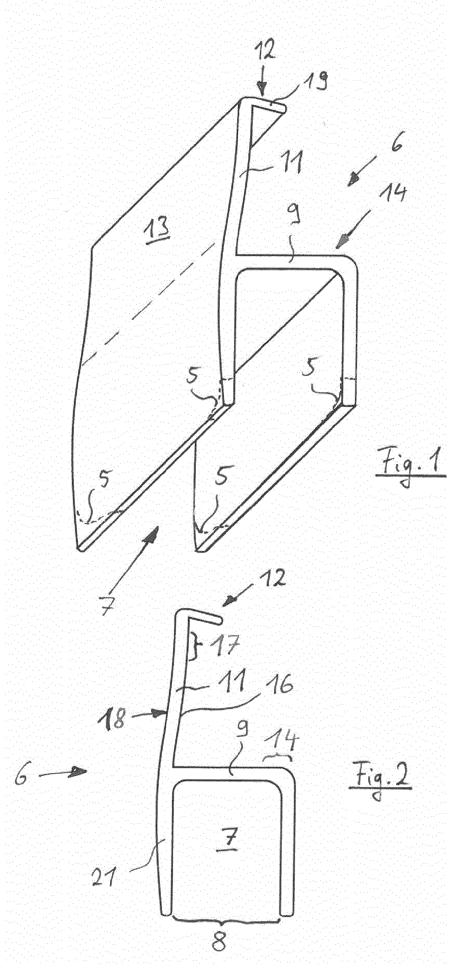

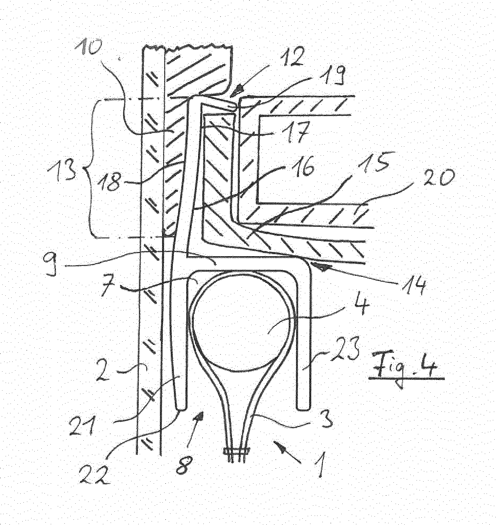

Ein erfindungsgemäßer Halter 6 für ein Flächenelement 1 (vgl. Fig. 4) einer Sonnenschutz- oder Verdunklungsvorrichtung, welches zur Abdeckung einer Fensterscheibe 2 eines Kraftfahrzeugs mit einer Bespannung aus einem dünnen Bespannungsmaterial 3 und einem randseitigen umlaufenden, vorzugsweise als Spannrahmen ausgebildeten Rahmen 4 versehen ist, weist einen für einen Abschnitt des vorzugsweise mit Bespannungsmaterial 3 überdeckten Rahmens 4 vorgesehenen Aufnahmeraum 7 mit einer Aufnahmeöffnung 8 aufweist, der von einer Basis 9 begrenzt wird (Fig. 1). Der Halter weist ein von der Basis 9 weg weisendes Einsteckelement 11 auf, dessen von der Basis 9 entferntes Ende 12 hakenartig ausgebildet ist und das auf einer der Fensterscheibe 2 zuzuwendenden Seite eine Anlagefläche 13 aufweist, wobei die Basis einen Abstützbereich 14 aufweist, der auf einer Seite der Basis 9 angeordnet ist, die in eine von der Anlagefläche 13 abgewandte Innenseite 16 des Einsteckelements 11 übergeht. Durch diese insbesondere auch in der Fig. 2 offenbarten Bereiche (Anlagefläche 13, Abstützbereich 14, Ende 12) ist ersichtlich eine Art Dreieckskonfiguration gegeben, die eine optimale Abstützung gegebenenfalls ergänzt mit einer Innenanlagefläche 17 des Einsteckelements ergibt. Dies ist auch in der Fig. 4 dargestellt. Die Innenseite 16 des Einsteckelements 11 bildet hier die Innenanlagefläche 17 aus, welches insbesondere von dem Abstützbereich 14 beanstandet ist (Fig. 2).

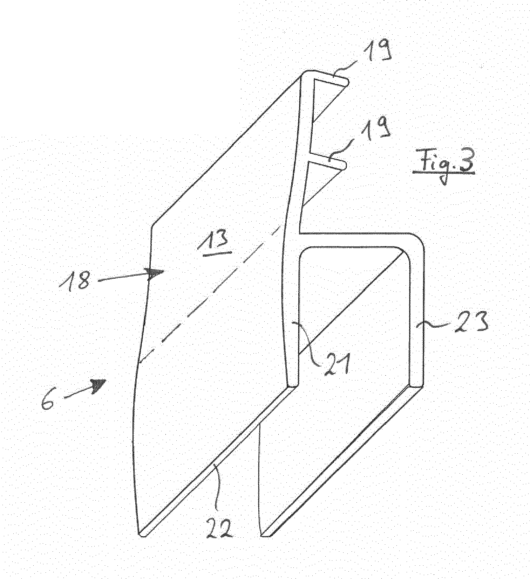

Im Ausführungsbeispiel gemäß der Fig. 3 sind an der Innenseite 16 wenigstens ein mit dem weiteren Einsteckelement 11 einen Haken ausbildende Stege 19 angeordnet, über die das Einsteckelement 11 an unterschiedliche Verkleidungsausbildungen anpassbar ist. Insbesondere der in der Fig. 3 untere Steg 19, wie auch der obere Steg 19 können auf der von der Basis abgewandten Seite mit einem Einschnitt versehen sein, der in Form eines einseitig wirkenden, ausreichend steifen Filmscharniers eine gewisse Flexibilität der Anbindung des Stegs an das weitere Einsteckelement erlaubt, so dass ein Einstecken in den in der Fig. 4 dargestellten Bereich erleichtert wird, gleichzeitig jedoch auch ein Zurückklappen in die in der Fig. 3 gezeigte Position möglich ist.

Insbesondere in den Fig. 2 und 4 sowie auch in den Fig. 1 und 3 ist im Querschnitt die Außenfläche einer zur Fensterscheibe hinzuwendenden Wand 21 des Aufnahmeraums 7 gebogen, wobei die Dicke der Wand 21 in Richtung des von der Basis 9 abgewandten Endes dünner wird, um bei Situationen, in denen das freie Ende einer Fensterscheibe 2 zum Rahmen hin läuft, dieses Ende der Wand 21 nicht zu kontaktieren. Durch die gerundete Außenfläche der Wand 21 wird die Scheibe zusätzlich in die gewünschte Position geleitet.

Die dargestellten Halter 6 sind als Strangpressprofile und im Wesentlichen h-förmig ausgebildet, so dass die Erzeugung der Halter auf einfache Weise möglich ist. In der Fig. 1 dargestellte gestrichelte Linien 5 zeigen, wie der Kantenverlauf im Falle von Abrundungen der Ecken sein würde.

Insbesondere ist der Halter 6 gemäß Fig. 4 mit einer in der dargestellten Querschnittsform des Einsteckelements 11 ungeraden Ausbildung versehen, wobei die zur Fensterscheibe 2 zuzuwendende Seite 18 konkav ausgebildet ist. Dies trägt dem Verlauf der sich in der Figurenebene nach unten verjüngenden Fensterscheibendichtung 10 Rechnung und sorgt aufgrund der nachgeführten Anlagefläche 13 gleichzeitig für auch im Endbereich der Fensterscheibendichtung 10 ausreichend hohen Druck in Richtung des Abstützbereichs 14. Bevorzugt ist die Anlagefläche über die überwiegende Fläche (> 50 %) der zur Fensterscheibe hinzuwendenden Seite des Einsteckelements ausgebildet. Da gleichzeitig das hakenartige Ende 12 an einem Verkleidungsteil 15, welches einen Rahmen 20 des Kraftfahrzeugs abdeckt, festgelegt ist, ergibt sich eine passgenaue Positionierung des Halters 6 und eine im Querschnitt nahezu parallele Ausrichtung der Innenwände der Wände 21 und 23 des Aufnahmeraums 7 zur Fensterscheibe 2. Durch Variationen in der Krümmung des Einsteckelements 17 (im Querschnitt) sowie der Länge desselben und der Breite der Basis 9 lässt sich der erfindungsgemäße Halter und mithin die erfindungsgemäße Sonnenschutz- oder Verdunklungsvorrichtung auf einfache Weise an verschiedene Fahrzeugmodelle und -typen anpassen.

## Patentansprüche

1. Halter für ein Flächenelement (1) einer Sonnenschutz- oder Verdunklungsvorrichtung, welches zur Abdeckung einer Fensterscheibe (2) eines Kraftfahrzeugs mit einer Bespannung aus einem dünnen Bespannungsmaterial (3) und einem randseitig umlaufenden, vorzugsweise als Spannrahmen ausgebildeten Rahmen (4) versehen ist, wobei der Halter (6) einen für einen Abschnitt des vorzugsweise mit dem Bespannungsmaterial (3) überdeckten Rahmens (4) vorgesehenen Aufnahmeraum (7) mit einer Aufnahmeöffnung (8) aufweist, der von einer Basis (9) begrenzt wird, wobei der Halter (6) ein von der Basis (9) wegweisendes Einsteckelement (11) aufweist, dessen von der Basis (9) entferntes Ende (12) hakenartig ausgebildet ist und das auf einer der Fensterscheibe (2) zuzuwendenden Seite eine Anlagefläche (13) aufweist, wobei die Basis (9) einen Abstützbereich (14) aufweist, der auf einer Seite der Basis (9) angeordnet ist, die in eine von der Anlagefläche (13) abgewandte Innenseite (16) des Einsteckelements (11) übergeht, **dadurch gekennzeichnet, dass** das Einsteckelement (11) im Querschnitt ungerade und bezüglich seiner zur Fensterscheibe (2) zuzuwendenden Seite (18) konkav ausgebildet ist.

2. Halter nach Anspruch 1, **dadurch gekennzeichnet, dass** die Innenseite (16) eine Innenanlagefläche (17) ausbildet, welche insbesondere von dem Abstützbereich (14) beabstandet ist.

3. Halter nach einem der vorhergehenden Ansprüche, **dadurch gekennzeichnet, dass** an der Innenseite (16) wenigstens ein mit dem weiteren Einsteckelement (11) einen Haken ausbildender Steg (19) angeordnet ist.

4. Halter nach einem der vorhergehenden Ansprüche, **dadurch gekennzeichnet, dass** im Querschnitt die Außenfläche einer zur Fensterscheibe hinzuwendenden Wand (21) des Aufnahmeraums (7) gebogen und die Wand (21) in Richtung des von der Basis (9) abgewandten Endes (22) dünner wird.

5. Halter nach einem der vorhergehenden Ansprüche, **dadurch gekennzeichnet, dass** der Aufnahmeraum (7) durch an der Basis (9) angeordnete Wände (21,23) begrenzt ist, deren einander zugewandte Oberfläche überwiegend parallel zueinander ausgebildet sind.

6. Halter nach einem der vorhergehenden Ansprüche, **dadurch gekennzeichnet, dass** der Halter (6) im Querschnitt im Wesentlichen h-förmig ausgebildet ist.

7. Halter nach Anspruch 6, **dadurch gekennzeichnet, dass** der Halter (6) durch ein Strangpressprofil ausgebildet wird.

8. Sonnenschutz- oder Verdunklungsvorrichtung mit einem Flächenelement (1), welches zur Abdeckung einer Fensterscheibe (2) eines Kraftfahrzeugs mit einer Bespannung aus einem dünnen Bespannungsmaterial (3) und einem randseitig umlaufenden, vorzugsweise als Spannrahmen ausgebildeten Rahmen (4)versehen ist, **gekennzeichnet durch** wenigstens einen Halter (6) nach einem der vorhergehenden Ansprüche.

## Claims

1. Holder for a surface element (1) of a sunshield or shading device, which is provided with a covering made of a thin covering material (3) for covering a windowpane (2) of a motor vehicle and a frame (4) encircling it on the margin, preferably designed as a stretching frame, wherein the holder (6) comprises a receiving space (7) with a receiving opening (8), provided for one portion of the frame (4) preferably covered with the covering material (3) and being bounded by a base (9), wherein the holder (6) comprises an insert element (11) pointing away from the base (9), whose end (12) distant from the base (9) is shaped as a hook, and comprising a bearing surface (13) on a side facing toward the windowpane (2), wherein the base (9) comprises a supporting section (14) situated on a side of the base (9) passing into an inner side (16) of the insert element (11) facing away from the bearing surface (13), **characterized in that** the insert element (11) is not straight in cross section and is concave in shape with respect to its side (18) facing toward the windowpane (2).

2. Holder according to Claim 1, **characterized in that** the inner side (16) forms an inner bearing surface (17), which is spaced apart in particular from the supporting section (14).

3. Holder according one of the preceding claims, **characterized in that** at least one web (19) forming a hook with the further insert element (11) is situated on the inner side (16).

4. Holder according to one of the preceding claims, **characterized in that** the outer surface of one wall (21) of the receiving space (7) facing toward the windowpane is curved in cross section and the wall (21) becomes thinner in the direction of the end (22) facing away from the base (9).

5. Holder according to one of the preceding claims, **characterized in that** the receiving space (7) is bounded by walls (21, 23) arranged on the base (9), whose mutually facing surfaces are formed predominantly parallel to each other.

6. Holder according to one of the preceding claims, **characterized in that** the holder (6) is substantially h-shaped in cross section.

7. Holder according to Claim 6, **characterized in that** the holder (6) is formed by an extruded profile.

8. Sunshield or shading device having a surface element (1), which is provided with a covering made of a thin covering material (3) for covering a windowpane (2) of a motor vehicle and a frame (4) encircling it on the margin, preferably designed as a stretching frame, **characterized by** at least one holder (6) according to one of the preceding claims.

## Revendications

1. Support pour un élément de surface (1) d'un dispositif d'occultation ou de protection contre le soleil, lequel élément de surface est prévu pour recouvrir une vitre (2) d'un véhicule automobile avec une toile constituée d'un matériau de toile mince (3) et d'un cadre (4) périphérique du côté des bords, réalisé de préférence sous forme de cadre tendeur, le support (6) présentant un espace de réception (7) prévu pour une partie du cadre (4) recouvert de préférence par le matériau de toile (3) et doté d'une ouverture de réception (8) qui est délimitée par une base (9), le support (6) présentant un élément d'insertion (11) détourné de la base (9), élément dont l'extrémité (12) éloignée de la base (9) est réalisée en forme de crochet et qui présente une surface d'appui (13) sur un côté devant être tourné vers la vitre (2), la base (9) présentant une région de support (14) qui est disposée sur un côté de la base (9), côté qui se prolonge par un côté intérieur (16), opposé à la surface d'appui (13), de l'élément d'insertion (11), **caractérisé en ce que** l'élément d'insertion (11) est formé de manière non rectiligne en section transversale et de manière concave par rapport à son côté (18) devant être tourné vers la vitre (2).

2. Support selon la revendication 1, **caractérisé en ce que** le côté intérieur (16) forme une surface d'appui intérieure (17), laquelle est espacée en particulier de la région de support (14).

3. Support selon l'une des revendications précédentes, **caractérisé en ce qu'**au moins une nervure (19) formant un crochet avec l'autre élément d'insertion (11) est disposée sur le côté intérieur (16).

4. Support selon l'une des revendications précédentes, **caractérisé en ce que** la surface extérieure d'une paroi (21), devant être tournée vers la vitre, de l'espace de réception (7) est courbe en section transversale et la paroi (21) est plus mince en direction de l'extrémité (22) opposée à la base (9).

5. Support selon l'une des revendications précédentes, **caractérisé en ce que** l'espace de réception (7) est délimité par des parois (21, 23) disposées au niveau de la base (9), parois dont les surfaces tournées l'une vers l'autre sont réalisées essentiellement parallèlement l'une à l'autre.

6. Support selon l'une des revendications précédentes, **caractérisé en ce que** le support (6) est réalisé sensiblement en forme de H en section transversale.

7. Support selon la revendication 6, **caractérisé en ce que** le support (6) est formé par un profilé extrudé.

8. Dispositif d'occultation ou de protection contre le soleil doté d'un élément de surface (1), lequel est prévu pour recouvrir une vitre (2) d'un véhicule automobile avec une toile constituée d'un matériau de toile mince (3) et d'un cadre (4) périphérique du côté des bords, réalisé de préférence sous forme de cadre tendeur, **caractérisé par** au moins un support (6) selon l'une des revendications précédentes.
